# EUROPÄISCHE PATENTSCHRIFT

(11) **EP 1 262 607 B1**
(45) Veröffentlichungstag und Bekanntmachung des Hinweises auf die Patenterteilung: **22.09.2004**
(21) Anmeldenummer: 01112748.7
(22) Anmeldetag: 25.05.2001
(51) Int. Cl.: E04F 15/02, B32B 21/08, B32B 9/04

(54) **Verfahren zur Herstellung einer Fussbodenplatte**
Method for the realization of a floor panel
Procédé de fabrication d'un panneau pour revêtement de sol

(43) Veröffentlichungstag der Anmeldung: 04.12.2002
(73) Patentinhaber: Ulrich Windmöller Consulting GmbH, 33758 Schloss Holte-Stukenbrock (DE)
(72) Erfinder: Ulrich Windmöller Consulting GmbH, 33758 Schloss Holte-Stukenbrock (DE)
(74) Vertreter: TER MEER STEINMEISTER & PARTNER GbR

(56) Entgegenhaltungen:
- EP-A- 0 197 324
- DE-A- 4 107 151
- DE-A- 19 806 136
- DE-A- 19 944 399
- FR-A- 2 693 496
- US-A- 4 054 699
- US-A- 5 103 614

## Beschreibung

Die Erfindung betrifft ein Verfahren zur Herstellung einer Laminat-Fußbodenplatte aus einer Trägerplatte aus Holz oder Holzwerkstoff, insbesondere MDF oder HDF oder anderen nachwachsenden Rohstoffen, z.B. Hanf oder Stroh, und einem auf diese Trägerplatte aufkaschierten Sandwich aus einer Dekorschicht und einer diese abdeckenden Verschleißschicht.

Fußbodenplatten dieser Art werden in der Praxis zumeist als Laminat bezeichnet. Sie werden mit unterschiedlichen Oberflächendekoren, insbesondere in Holz- oder Steindekor angeboten. Die Anwendung der vorliegenden Erfindung soll jedoch nicht beschränkt sein auf die auf dem Markt mit Laminat bezeichneten Platten im engeren Sinne, sondern ist auch anwendbar auf andere Platten, deren Oberflächengestaltung durch ein Dekorpapier oder eine Dekorfolie gewonnen wird, beispielsweise Parkettplatten oder Bodendielen.

Zum Stand der Technik wird zunächst auf die Patentanmeldung 199 44 399 der Anmelderin Bezug genommen, in der sich weitere Hinweise zum Stand der Technik befinden. Diese Druckschrift spricht bereits einen Nachteil der genannten Fußbodenmaterialien an, der in der Erzeugung von Trittschall besteht. Die relativ harte Oberfläche in Verbindung mit der relativ geringen Masse der Platten führt dazu, daß beim Betreten ein relativ lauter, heller Trittschall entsteht, der nicht nur in dem mit dem Material ausgelegten Raum, sondern insbesondere auch in benachbarten und vor allem im nächsttieferen Stockwerk liegenden Räumen des betreffenden Gebäudes als störend empfunden werden kann.

Es sind daher bereits viele Versuche zur Reduzierung des Trittschalls unternommen und in die Praxis umgesetzt worden. So beschreibt beispielsweise die DE 299 08 733 U 1 der Anmelderin eine Schalldämmmatte, die mit der Rückseite oder Unterseite von Fußbodenplatten verbunden werden kann.

Auch die EP 864 712 A2 und die DE 198 51 656 A1 befassen sich mit einem Bodenbelag mit unterlegter Schalldämmmatte.

Durch derartige Schalldämmmatten kann zwar die Übertragung des Körperschalls von der Bodenplatte auf die Unterkonstruktion in gewisser Weise verringert werden, jedoch bleibt das harte Trittgeräusch im Raum selbst vorhanden. Besser wäre daher eine Lösung, bei der das Trittgeräusch gleich bei der Entstehung vermindert wird.

Auch hier sind einige Speziallösungen bekannt, bei der beispielsweise auf der oberen Oberfläche einer Trägerplatte Linoleum (DE 44 02 352 A1) oder Kork (DE 41 34 339 A1) angebracht sind.

Oberflächen aus Linoleum oder Kork sind jedoch nur in speziellen Fällen verwendbar und ermöglichen es insbesondere nicht, Böden mit z. B. hochwertig wirkenden Holz- oder Steindekoren herzustellen. Korkböden dieser Art sind im übrigen sehr teuer.

Schließlich beschreibt die DE 41 07 151 C2 eine mehrschichtige Verbund- oder Laminatkonstruktion zur Schaffung von Fußbodenelementen, bestehend aus einem Spanplattenmaterial oder dergleichen, auf dem über eine Klebstoffschicht ein Sandwich aus mehreren Kunststoffolien angebracht ist. Die Fußbodenbelagfolie soll eine gute Deformationsbeständigkeit und verbesserte Haftfähigkeit besitzen. Es werden zahlreiche Folienarten erörtert. Unter anderem wird eine Oberschicht aus mindestens drei Folien beschrieben, die auf Polyolefin-Basis hergestellt sind und eine Verschleiß- sowie eine Dekorschicht bilden. Die Folien können eine Stärke von 160 bis 1000 µm aufweisen. Es ist vorstellbar, daß auf diese Weise Oberflächen entstehen, die weniger hart sind als die üblichen, auf Melaminharz-Basis hergestellten Oberflächen. Eine gezielte Trittschalldämpfung ist jedoch nicht zu erwarten und wird auch in der Druckschrift nicht erörtert.

Der Erfindung liegt die Aufgabe zugrunde, ein Verfahren zur Herstellung einer Fußbodenplatte der eingangs genannten Art zu schaffen, die eine verringerte Trittschallbildung hervorruft.

Diese Aufgabe wird bei einem Verfahren der obigen Art dadurch gelöst, daß auf die Rückseite der Dekorschicht eine Polyurethan-Schicht aufgebracht wird, daß diese Polyurethan-Schicht mit der Dekorschicht und der Verschleißschicht zu einem Sandwich fest verbunden wird und daß dieses Sandwich anschließen mit der Trägerplatte verbunden wird.

Die Polyurethan-Schicht auf der Rückseite der Dekorschicht kann als eine Zwei-Komponenten-Polyurethan-Beschichtung direkt auf die Dekorschicht aufgerakelt oder gestrichen werden.

Hierzu wird die Papierdekorschicht durch Trocknung von anhaftender Feuchte größtenteils befreit, und dann wird die flüssige Polyurethanbeschichtung und über Walzen- oder Streichrakel in der definierten Stärke aufgebracht und in einem Ofendurchlauf bei 80-160°C gehärtet.

Alternativ ist es auch möglich, daß die flüssige Polyurethanbeschichtung auf einen Trägerwerkstoff, z.B. eine Polyesterfolie aufgetragen und nach Ofenhärtung bzw. Teilhärtung mit der Dekorschicht oder Dekorfolie zusammenkaschiert wird.

Die Stärke der Polyurethan-Schicht kann von 100 µm bis 5 mm betragen. Vorzugsweise eignen sich Stärken von 1,0 - 1,5 mm.

Polyurethan hat den besonderen Vorteil, daß seine charakteristischen Eigenschaften in weitem Rahmen einstellbar sind. Dies gilt insbesondere in bezug auf Härte, Elastizität, Eindruckverhalten und Erholung nach der Bildung von Eindrücken beim Begehen.

Die Dekorschicht ist vorzugsweise aus einem Dekorpapier und einer transparenten Verschleißschicht. Dekorpapiere haben gegenüber Dekorfolien den Vorteil, daß sie auf dem Markt in großer Zahl angeboten werden. Das Bedrucken von Papier ist wesentlich einfacher als das Bedrucken von Folien. Es kann also auf eine Vielzahl von vorhandenen Dekoren zurückgegriffen werden. Bei der Verwendung von teuren Folien kommen nur Spezialanfertigungen in Frage. Entsprechende Druckzylinder sind auf dem Markt nicht verfügbar. Durch die Verwendung von Papier verringern sich die Investitionskosten.

Das Dekorpapier kann verwendet werden, wie es bei der Herstellung von Laminat-Fußbodenplatten bekannt ist. Lediglich die Art und Weise der Imprägnierung ändert sich.

Das Dekorpapier, auf dessen Rückseite sich die zuvor behandelte Polyurethan-Schicht befindet, wird nach oben bzw. außen abgedeckt durch eine Nutz- oder Verschleißschicht, die beispielsweise hergestellt werden kann aus einem UVhärtbaren Polyurethan-Lack oder einer elektronenstrahl-härtbaren Acrylat-Nutzschicht, einem Zwei-Komponenten-Lacksystem auf Urethanbasis oder einer Polyester- oder Polyolefin-Folie. Die Nutz- oder Verschleißschicht ist in jedem Falle transparent, so daß die Dekorschicht sichtbar bleibt. Sie kann Bestandteile enthalten, die den Verschleiß reduzieren.

Als Verschleißschicht kommt insbesondere eine elastisch eingestellte Folie aus elektronenstrahl-gehärteten Acrylaten oder Polyolefin oder Polyester (PET) oder TPU oder PUR in Betracht. Eine derartige Folie hat gegenüber harten Lacken oder Melamin-Oberflächen den Vorteil, daß sie der Verformung des Dekorpapiers mit der dämpfenden, nachgiebigen Polyurethan-Schicht beim Betreten folgen kann.

Zur Verbesserung der optischen Wirkung kann die Oberfläche mit einer Holzporen- oder Holzprägestruktur oder sonstigen Prägestruktur versehen sein.

Das Sandwich aus der oberen Nutz- oder Verschleißschicht und der unter dieser liegenden Dekorschicht mit Polyurethan-Beschichtung auf der Rückseite wird auf die Trägerplatte aufkaschiert oder aufgeleimt. Anschließend wird die Platte in Einzelelemente in Dielen- oder Fliesenformat aufgetrennt und am Rand mit Nut und Federprofilen oder dergleichen versehen. Hierbei zeigt sich ein weiterer Vorteil der speziellen Unterschicht. Das Produkt läßt sich anders als übliche Laminatböden in Stärke der Schicht anfasen.

Durch die rückwärtige Polyurethan-Beschichtung des Dekorpapiers wird u.a. die Möglichkeit geboten, die Oberfläche so weich und elastisch einzustellen, daß eine erhebliche Trittschallreduzierung erzielt werden kann. Auch andere Oberflächeneigenschaften können in besonderer Weise durch Einstellung des Polyurethan-Materials gefördert werden, so daß Bodenbeläge gebildet werden können, die besondere Oberflächeneigenschaften aufweisen, die speziell für Sportböden, Turnböden usw. geeignet sind und z.B. das Ballrücksprungverhalten beeinflussen.

Der erfindungsgemäß hergestellte Bodenbelag wird vorzugsweise schwimmend verlegt. Daher wird es beim Verlegen sicherlich zweckmäßig sein, eine Dämmunterlage zu verwenden, die vorzugsweise eine hohe Dichte haben sollte und als gesonderte Matte verlegt oder auf der Rückseite der erfindungsgemäßen Platte verklebt werden kann. Ein möglichst hohes Gewicht (z.B. > 800 kg/m³) der Dämmatte führt zu einer besseren Dämpfungswirkung durch Reduzierung des Schall-Leitungspegels, auch im Hinblick auf Trittschallverbesserung nach unten.

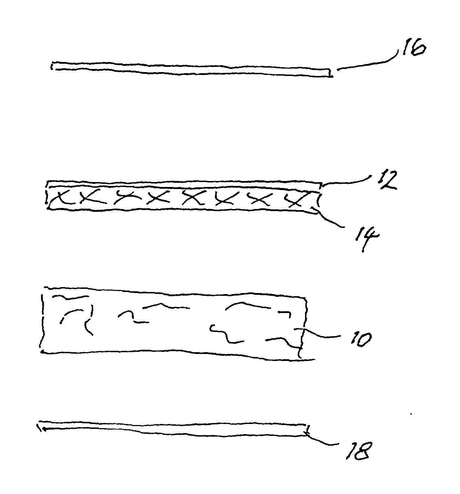

Im folgenden wird ein Ausführungsbeispiel anhand der beigefügten Zeichnung näher erläutert.

Die einzige Figur ist ein Teilquerschnitt durch eine gemäß der Erfindung hergestellte Fußbodenplatte in Explosionsdarstellung.

Die Fußbodenplatte besteht im Kern aus einer Trägerplatte 10, etwa aus Spanplattenmaterial, insbesondere MDF oder HDF oder aus Stroh-/Hanfplatten. Darüber liegt eine Lage eines Dekorpapiers 12, auf dessen der Trägerplatte 10 zugewandten Unter- oder Rückseite eine Polyurethan-Schicht 14 angebracht worden ist. Die Polyurethan-Schicht 14 kann als Beschichtungsanstrich aufgebracht, als vorfabrizierte Folie aufgeklebt oder anderweitig auf die Rückseite des Dekorpapiers appliziert sein.

Über dem Dekorpapier 12 liegt eine Verschleißschicht 16, beispielsweise in der Form einer transparenten Folie.

Zunächst werden das Dekorpapier 12, dessen rückseitige Polyurethan-Schicht und die Verschleißschicht 16 zu einem Sandwich fest verbunden, beispielsweise verpreßt oder verklebt. Dieses Sandwich wird alsdann mit der Trägerplatte 10 zu einer Laminat-Fußbodenplatte verklebt oder verpreßt. Dabei kann an der Unterseite der Trägerplatte 10 eine Gegenzugfolie 18 oder eine Dämmunterlage aufgebracht werden, die verhindert, daß sich die Trägerplatte 10 aufgrund von Schrumpfungen der oberen Schichten 12,14,16 verbiegt.

Das Sandwich aus der Polyurethan-Schicht 14 mit der Dekorpapierlage 12 und der Verschleißschicht 16 ohne der Trägerplatte 10 eignet sich auch als elastischer Fußbodenbelag, der auf eine Unterkonstruktion, z.B. einem Estrich geklebt wird.

Sowohl die Verschleißschicht 16 als auch die Polyurethan-Schicht 14 auf der Unterseite des Dekorpapiers 12 können ihrerseits aus mehreren Schichten bestehen.

Die Verschleißschicht 16 kann aus einem thermoplastischen Kunststoff, insbesondere einem halogenfreien thermoplastischen Kunststoff bestehen und durch Direktkaschierung auf das Dekorpapier 12 aufgebracht werden. Besonders bevorzugt ist eine Schichtdicke von 100 bis 800 µm. Beispielsweise kann die Verschleißschicht 16 aus aliphatischen oder aromatischen Polyurethan-Komponenten zusammengesetzt sein.

Die Polyurethan-Schicht 14 kann mit organischen oder anorganischen Füllstoffen aufgefüllt sein. In Betracht kommen Sand, Kreide, Ton, Mineralien oder Glas als anorganische Füllstoffe, Holz, Kork, Lignin, Pflanzenfasern als organische Füllstoffe oder auch Polystyrol oder Granulate als polymere Füllstoffe. Auch die Polyurethan-Schicht kann direkt auf die Rückseite des Dekorpapiers 12 aufkaschiert werden. Sie bildet dabei einen Schaum, dessen Dicke bei bevorzugten Beispielen zwischen 50 und 100 µm liegt.

In die Verschleißschicht 16 können Partikel aus Quarzsand, Korund oder Siliziumcarbid zur Erhöhung der Verschleißfestigkeit und zur Rutschhemmung eingestreut werden.

Die erfindungsgemäß hergestellte Platte kann auch zur Wand- oder Deckenverkleidung oder für den Möbelbau verwendet werden.

## Patentansprüche

1. Verfahren zur Herstellung einer Laminat-Fußbodenplatte aus einer Trägerplatte (10) aus Holz oder Holzwerkstoff, insbesondere MDF oder HDF oder anderen nachwachsenden Rohstoffen, z.B. Hanf oder Stroh, und einem auf diese Trägerplatte (10) aufkaschierten Sandwich aus einer Dekorschicht (12) und einer diese abdeckenden Verschleißschicht (16), **dadurch gekennzeichnet, daß** auf die Rückseite der Dekorschicht (12) eine Polyurethan-Schicht (14) aufgebracht wird, daß diese Polyurethan-Schicht (14) mit der Dekorschicht (12) und der Verschleißschicht (16) zu einem Laminat fest verbunden wird und daß dieses Laminat anschließend mit der Trägerplatte (10) verbunden wird.

2. Verfahren nach Anspruch 1, **dadurch gekennzeichnet,** da**ß** die Dekorschicht (12) ein Dekorpapier ist.

3. Verfahren nach Anspruch 2, **dadurch gekennzeichnet, daß** die Dekor schicht (12) ein Dekorpapier auf Zellstoffbasis mit einem Flächengewicht von 30-80 g/m³ , insbesondere 40 - 60 g/m³ ist.

4. Verfahren nach Anspruch 1 oder 2, **dadurch gekennzeichnet, daß** die Polyurethan-Schicht (14) eine Zwei-Komponenten-Polyurethan-Beschichtung ist.

5. Verfahren nach einem der Ansprüche 1 bis 4, **dadurch gekennzeichnet, daß** die Polyurethan-Schicht (14) eine Stärke von 100-5000 µm aufweist.

6. Verfahren nach einem der Ansprüche 1 bis 5, **dadurch gekennzeichnet, daß** die Polyurethan-Schicht (14) eine Stärke von 500-2000 µm aufweist.

7. Verfahren nach einem der Ansprüche 1 bis 6, **dadurch gekennzeichnet, daß** die Verschleißschicht (16) ein UV-härtbarer Polyurethan-Lack ist.

8. Verfahren nach einem der Ansprüche 1 bis 6, **dadurch gekennzeichnet, daß** die Verschleißschicht (16) ein elektronenstrahl-gehärtetes Acrylharz ist.

9. Verfahren nach einem der Ansprüche 1 bis 6, **dadurch gekennzeichnet, daß** die Verschleißschicht (16) ein reaktives Zwei-Komponenten-Lack-System ist.

10. Verfahren nach einem der Ansprüche 1 bis 6, **dadurch gekennzeichnet, daß** die Verschleißschicht (16) eine transparente Polyester-Folie ist.

11. Verfahren nach einem der Ansprüche 1 bis 6. **dadurch gekennzeichnet, daß** die Verschleißschicht (16) eine transparente Polyolefin-Schicht ist.

12. Verfahren nach einem der Ansprüche 1 bis 11, **dadurch gekennzeichnet, daß** die Trägerplatte (10) aus nachwachsenden Rohstoffen, z.B. Hanf oder Stroh, hergestellt wird.

13. Verfahren nach einem der Ansprüche 1 bis 12, **dadurch gekennzeichnet, daß** die Verschleißschicht (16) und/oder die Polyurethan-Schicht (14) jeweils aus mehreren Schichten aufgebaut ist.

14. Verfahren nach einem der Ansprüche 1 bis 6, **dadurch gekennzeichnet, daß** dieVerschleißschicht (16) aus aliphatischen oder aromatischen Polyurethan-Komponenten zusammengesetzt ist.

15. Verfahren nach einem der vorhergehenden Ansprüche, **dadurch gekennzeichnet, daß** die Polyurethan-Schicht (14) organische oder anorganische Füllstoffe enthält.

16. Verfahren nach einem der vorhergehenden Ansprüche, **dadurch gekennzeichnet,** da**ß** die Verschleißschicht (16) mineralische Partikel aus Quarzsand, Korund oder Siliziumcarbid zur Rutschhemmung und Verschleißreduzierung enthält.

17. Verfahren nach einem der Ansprüche 1 bis 16, **dadurch gekennzeichnet, daß** die Polyurethan-Schicht (14) mit Hilfe einer Streichanlage auf die Dekorschicht (12) aufgetragen wird.

18. Verfahren nach einem der Ansprüche 1 bis 16, **dadurch gekennzeichnet, daß** die Dekorschicht (12) unmittelbar nach Ofenaushärtung der Polyurethan-Schicht (14) mit dieser zusammenkaschiert oder kalandriert wird.

19. Verfahren nach einem der Ansprüche 1 bis 16, **dadurch gekennzeichnet, daß** das Sandwich aus Dekorschicht (12) und Verschleißschicht (16) nach Ofenaushärtung der Polyurethan-Schicht (14) mit dieser zusammenkaschiert oder - kalandriert wird.

## Claims

1. Method for producing a laminated floor panel consisting of a carrier panel (10) of wood or a wooden material, in particular MDF or HDF or other renewable raw materials, e.g. hemp or straw, and a sandwich, which is laminated onto this carrier panel (10), consisting of a decorative layer (12) and a wearing layer (16) covering the latter, **characterised in that** a polyurethane layer (14) is applied to the back of the decorative layer (12), that this polyurethane layer (14) is firmly bonded to the decorative layer (12) and the wearing layer (16) to form a laminate, and that this laminate is subsequently bonded to the carrier panel (10).

2. Method according to Claim 1, **characterised in that** the decorative layer (12) is a decorative paper.

3. Method according to Claim 2, **characterised in that** the decorative layer (12) is a pulp-based decorative paper with a basis weight of 30-80 g/m³, in particular 40-60 g/m³.

4. Method according to Claim 1 or 2, **characterised in that** the polyurethane layer (14) is a two-component polyurethane coating.

5. Method according to any one of Claims 1 to 4, **characterised in that** the polyurethane layer (14) is of a thickness of 100-5000 µm.

6. Method according to any one of Claims 1 to 5, **characterised in that** the polyurethane layer (14) is of a thickness of 500-2000 µm.

7. Method according to any one of Claims 1 to 6, **characterised in that** the wearing layer (16) is a UV-curable polyurethane lacquer.

8. Method according to any one of Claims 1 to 6, **characterised in that** the wearing layer (16) is an electron beam-cured acrylic resin.

9. Method according to any one of Claims 1 to 6, **characterised in that** the wearing layer (16) is a reactive two-component lacquer system.

10. Method according to any one of Claims 1 to 6, **characterised in that** the wearing layer (16) is a transparent polyester film.

11. Method according to any one of Claims 1 to 6, **characterised in that** the wearing layer (16) is a transparent polyolefin layer.

12. Method according to any one of Claims 1 to 11, **characterised in that** the carrier panel (10) is made of renewable raw materials, e.g. hemp or straw.

13. Method according to any one of Claims 1 to 12, **characterised in that** the wearing layer (16) and/or the polyurethane layer 14 are/is in each case built up from a plurality of layers.

14. Method according to any one of Claims 1 to 6, **characterised in that** the wearing layer (16) is composed of aliphatic or aromatic polyurethane components.

15. Method according to any one of the preceding Claims, **characterised in that** the polyurethane layer (14) contains organic or inorganic fillers.

16. Method according to any one of the preceding Claims, **characterised in that** the wearing layer (16) contains mineral particles of quartz sand, corundum or silicon carbide for skid resistance and wear reduction purposes.

17. Method according to any one of Claims 1 to 16, **characterised in that** the polyurethane layer (14) is applied to the decorative layer (12) by means of a coating installation.

18. Method according to any one of Claims 1 to 16, **characterised in that**, directly after the polyurethane layer (14) has been oven-cured, the decorative layer (12) is laminated together with the latter or calendered.

19. Method according to any one of Claims 1 to 16, **characterised in that**, after the polyurethane layer (14) has been oven-cured, the sandwich consisting of the decorative layer (12) and the wearing layer (16) is laminated together with the latter or calendered.

## Revendications

1. Procédé de fabrication d'une plaque de plancher stratifiée comprenant une plaque de support (10) en bois ou en matériau dérivé du bois, en particulier en panneau de fibres à densité moyenne ou panneau de fibres à haute densité ou autres matières premières à croissance postérieure, par ex. du chanvre ou de la paille et un sandwich, laminé sur cette plaque de support (10), composé d'une couche décorative (12) et d'une couche d'usure (16) qui recouvre celle-ci, **caractérisé en ce que**, sur la face arrière de la couche décorative (12), on appose une couche en polyuréthane (14), que l'on lie solidement cette couche de polyuréthane (14) avec la couche décorative (12) et la couche d'usure (16) pour produire un stratifié et que l'on lie ensuite ce stratifié avec la plaque de support (10).

2. Procédé selon la revendication 1, **caractérisé en ce que** la couche décorative (12) est un papier décoratif.

3. Procédé selon la revendication 2, **caractérisé en ce que** la couche décorative (12) est un papier décoratif à base cellulosique, avec un grammage de 30 à 80 g/m³, en particulier de 40 à 60 g/m³.

4. Procédé selon la revendication 1 ou 2, **caractérisé en ce que** la couche de polyuréthane (14) est un revêtement en polyuréthane à deux composants.

5. Procédé selon l'une des revendications 1 à 4, **caractérisé en ce que** la couche de polyuréthane (14) présente une épaisseur de 100 à 5000 µm.

6. Procédé selon l'une des revendications 1 à 5, **caractérisé en ce que** la couche de polyuréthane (14) présente une épaisseur de 500 à 2000 µm.

7. Procédé selon l'une des revendications 1 à 6, **caractérisé en ce que** la couche d'usure (16) est une laque de polyuréthane, durcissable aux UV.

8. Procédé selon l'une des revendications 1 à 6, **caractérisé en ce que** la couche d'usure (16) est une résine acrylique, durcie par faisceau électronique.

9. Procédé selon l'une des revendications 1 à 6, **caractérisé en ce que** la couche d'usure (16) est un système de laque à deux composants réactif.

10. Procédé selon l'une des revendications 1 à 6, **caractérisé en ce que** la couche d'usure (16) est une feuille de polyester transparente.

11. Procédé selon l'une des revendications 1 à 6, **caractérisé en ce que** la couche d'usure (16) est une couche depolyoléfinie transparente.

12. Procédé selon l'une des revendications 1 à 11, **caractérisé en ce que** la plaque de support (10) est fabriquée à partir de matières premières à croissance postérieure, par ex. du chanvre ou de la paille.

13. Procédé selon l'une des revendications 1 à 12, **caractérisé en ce que** la couche d'usure (16) et / ou la couche de polyuréthane (14) sont constituées chacune de plusieurs couches.

14. Procédé selon l'une des revendications 1 à 6, **caractérisé en ce que** la couche d'usure (16) est constituée à partir de composants de polyuréthane aliphatiques ou aromatiques.

15. Procédé selon l'une des revendications précédentes, **caractérisé en ce que** la couche de polyuréthane (14) contient des matières de charge organiques ou inorganiques.

16. Procédé selon l'une des revendications précédentes, **caractérisé en ce que** la couche d'usure (16) contient des particules minérales en sable silicieux, corindon ou carbure de silicium, pour empêcher le dérapage et réduire l'usure.

17. Procédé selon l'une des revendications 1 à 16, **caractérisé en ce que** la couche de polyuréthane (14) est appliquée sur la couche décorative (12) à l'aide d'une coucheuse.

18. Procédé selon l'une des revendications 1 à 16, **caractérisé en ce que** la couche décorative (12) est, immédiatement après le durcissement au four de la couche de polyuréthane (14), stratifiée conjointement ou calandrée avec celle-ci.

19. Procédé selon l'une des revendications 1 à 16, **caractérisé en ce que** le sandwich, composé de la couche décorative (12) et de la couche d'usure (16), est, après le durcissement au four de la couche de polyuréthane (14), stratifié conjointement ou calandré avec celle-ci.
